# FASCICULE DE BREVET EUROPEEN

(11) **EP 0 697 177 B1**
(45) Date de publication et mention de la délivrance du brevet: **06.06.2001**
(21) Numéro de dépôt: 94112910.8
(22) Date de dépôt: 19.08.1994
(51) Int. Cl.: A23L 1/16

(54) **Pâte alimentaire à cuisson rapide**
Schnellkochbare Teigwaren
Quick-cooking alimentary pasta

(43) Date de publication de la demande: 21.02.1996
(73) Titulaire: SOCIETE DES PRODUITS NESTLE S.A., 1800 Vevey (CH)
(72) Inventeur: Hauser, Thomas Wilhelm, CH-8057 Zurich (CH); Panattoni, Lorenzo, CH-8400 Winterthur (CH)
(74) Mandataire: Wavre, Claude-Alain

(56) Documents cités:
- EP-A- 0 450 428
- EP-A- 0 557 139
- PATENT ABSTRACTS OF JAPAN vol. 9, no. 112 (C-281) (1835) 16 Mai 1985 & JP-A-60 006 172 (NISSHIN SEIFUN K.K.) 12 Janvier 1985

## Description

La présente invention a pour objet une pâte alimentaire longiligne et tubulaire pouvant être cuite en un temps de l'ordre de 5 min et présentant, une fois cuite, une forme cylindrique et une texture en bouche équivalentes à celles d'une pâte cuite traditionnelle du même type.

On connait déjà diverses pâtes alimentaires à cuisson rapide. Elles présentent généralement une épaisseur comprise entre 0,3 et 0,6 mm, ou bien à leur surface des rainures longitudinales et parallèles, permettant d'effectuer l'opération de cuisson en un temps inférieur à celui nécessaire pour effectuer la même opération avec des produits sans rainures.

EP 0450428 décrit ainsi un "spaghetti" pouvant être cuit en un temps minimum de 2 min, composé de trois lobes formant des rainures externes, lesdits lobes, d'une forme particulière, étant longitudinaux, parallèles et équidistants angulairement de 120°.

De même, EP 0557139 décrit des pâtes alimentaires longilignes et tubulaires capables d'être cuites dans des sachets perforés en un temps minimum de 4 min, lesdites pâtes cuites ne s'agglomérant pas à cause de striures présentes à leur surface extérieure. L'épaisseur de la paroi de ces pâtes est comprise entre 0,4 et 0,6 mm. De plus, ces striures ont de préférence une hauteur inférieure à la moitié de l'épaisseur de la paroi, ladite hauteur étant généralement comprise entre 0,2 et 0,3 mm. Enfin, ces striures peuvent également présenter une largeur comprise entre 0,5 et 0,85 mm, et un intervalle séparant deux striures voisines compris entre 0,5 et 0,85 mm.

Malheureusement, la texture en bouche de ces pâtes tubulaires cuites est molle voire flasque, et ne rappelle pas suffisammant le caractère consistant de pâtes tubulaires cuites du même type, c'est à dire des pâtes sans striures, présentant avant cuisson une paroi d'épaisseur comprise entre 1,1 et 1,6 mm, et présentant une fois cuite le même aspect dans une assiette.

De plus, ces pâtes s'ovalisent lors de leur cuisson, ce qui ne plait pas au consommateur soucieux d'obtenir une pâte d'aspect cylindrique telle que l'on peut en obtenir en cuisant des pâtes tubulaires du même type, comme décrit ci-dessus

La présente invention a pour but de pallier les inconvénients de l'art antérieur.

A cet effet, la pâte alimentaire à cuisson rapide longiligne et tubulaire selon l'invention présente, en section transversale, une paroi d'épaisseur comprise entre 0,6 et 1,1 mm et des dents à la surface interne du tube, longitudinales et parallèles entre-elles, ayant une hauteur comprise entre 0,3 et 1,6 mm et un rapport hauteur sur épaisseur de la paroi compris entre 0,4 et 2, les dents internes présentent une largeur comprise entre 0,3 et 0,9 mm et un intervalle entre deux dents voisines compris entre 0,2 et 0,7 mm, les dents internes du tube étant susceptibles de se refermer pendant la cuisson en laissant juste de toutes petites lignes extérieures longitudinales.

De préférence, la paroi présente une épaisseur inférieure à 1,05 mm.

Dans la suite de la description, on entend par "pâte traditionnelle" une pâte alimentaire longiligne et tubulaire, généralement cuite en 10 à 15 min, pouvant être droite, courbée ou torsadée, et présentant une paroi d'épaisseur généralement comprise entre 1,1 et 1,6 mm, dont la surface externe est lisse, ondulée ou crénelée, par exemple. Parmi ces pâtes, on peut ainsi comprendre les divers types de pâtes tubulaires traditionnelles, tels que (les noms sont donnés en italien) les penne, permette, pennettine, maccheroni, maccheroncelli, mazzani, zite, candele, garganelli, campagnole, cannelli zitoni, cannelli ziti, tagliati di mezzani, canelloni, maniche, bombardoni, rigatoni, cannaroni, rigatti, mezze maniche, ditaloni, ditali di zitone, ditali, avemarie, coralli, cannolichi, denti d'elefante, gigatoni, crestine, gobbetti, chifferi, cimieri, lumache, par exemple ("Die gute form", M. Gôtz et al., Museum frit gestaltung Basel, 1991).

Les avantages du produit selon la présente invention, remarqués au cours des essais qui ont été effectués, sont les suivants:
- temps de cuisson d'environ 5 min selon la méthode traditionnelle (eau en ébullition), c'est à dire réduit de plus de 50% par rapport au temps nécessaire pour la cuisson d'une pâte traditionnelle ayant le même diamètre;
- texture en bouche ayant un caractère consistant, rappellant fortement celui de pâtes traditionnelles ayant le même diamètre;
- produit cuit cylindrique;
- capacité d'adsorber les condiments, supérieure à celle de pâtes traditionnelles à cause de la présence desdites dents longitudinales;
- aspect du produit cuit sur l'assiette semblable à celui de pâtes traditionnelles du même type. En effet, pendant la cuisson, les dents présentent à la surface interne du tube se referment en laissant juste de toutes petites lignes extérieures longitudinales, qui sont quasiment invisibles du fait qu'elles sont à l'intérieur du tube.

Les pâtes selon la présente invention possêdent donc des dents à la surface interne du tube, ayant une hauteur comprise entre 0,3 et 1,6 mm, et ayant aussi un rapport hauteur sur épaisseur de la paroi compris entre 0,4 et 2. On a pu en effet montrer que des dents internes trop petites ne permettent pas d'obtenir une texture en bouche et un aspect cylindrique de la pâte cuite suffisamment acceptables. De plus, des dents trop grandes ont tendance à être trop visibles avant ou après cuisson, et ont également tendance à favoriser l'ovalisation du cylindre une fois cuit.

D'un autre coté, le cheminement longitudinal des dents n'est pas un critère important pour obtenir une pâte ayant les avantages décrits ci-dessus. En effet, les dents peuvent être parallèles à l'axe longitudinal de la pâte ou encore tourner autour de cet axe en formant des torsades, par exemple. On préfére une torsade des dents, car lorsque celles-ci se referment lors de la cuisson, elles laissent des sillons internes qui, de par leur configuration en forme de ressort, contraignent la pâte à rester cylindrique

De plus, la pâte selon l'invention peut présenter sur sa surface extérieure, des ondulations plus ou moins marquées, par exemple. Cependant, l'épaisseur de la paroi de la pâte n'est pas, de préférence, inférieure à environ 0,6 mm, ladite épaisseur étant calculée à partir de la surface interne du tube de la pâte, en faisant abstraction des dents, jusqu'à la surface externe du tube la plus haute.

De même, la pâte selon l'invention peut présenter sur sa surface extérieure, en outre, au moins une pâle d'hélice longitudinale, comme c'est le cas pour les pâtes du type "lumache" citées ci-dessus, par exemple. Dans ce cas aussi, l'épaisseur de la paroi du tube n'est pas de préférence inférieure à environ 0,6 mm, ladite épaisseur étant calculée à partir de la surface interne du tube de la pâte, en faisant abstraction des dents, jusqu'à la surface externe du tube la plus haute, en faisant abstraction des pâles d'hélices.

Pour obtenir une pâte selon l'invention ayant les avantages décrits ci-dessus, on peut fabriquer une pâte ayant des dents internes dont le pied, c'est à dire la partie inférieure de dent ayant une hauteur de 0,2 à 0,8 mm à partir de la surface interne du tube par exemple, présente un contour parallélipédique ou tronconique avec des parois sensiblement planes voire convexe et/ou concave. De préférence la largeur du pied des dents est comprise entre 0,3 et 0,9 mm.

Par contre, la portion de tête des dents, c'est à dire la partie située au dessus du pied de chaque dent, peut avoir toutes les formes imaginables, c'est à dire peut être carrée, rectangulaire, triangulaire, convexe, ou en forme de tête de clou, par exemple. De préférence, la largeur de la portion de tête de chaque dent est comprise entre 0,3 et 0,9 mm, et on choisit des formes qui concourent à la fermeture optimale de l'espace entre les dents après cuisson. En particulier, on choisit une portion de tête en forme de tête de clou, qui présente l'avantage d'augmenter encore la surface de la pâte accessible à l'eau, par exemple.

Enfin, la surface interne du cylindre séparant deux dents voisines peut être sensiblement plane ou bien encore avoir un rayon de courbure sensiblement égal à celui d'une pâte traditionnelle de même diamètre, par exemple, ledit diamètre étant calculé à partir de la surface interne du tube. Cependant, on peut aussi accentuer la courbure de cette surface et la rendre ainsi concave voire même triangulaire, avec une profondeur comprise entre 0,2 et 0,4 mm, par exemple, en prenant toutefois garde à ne pas avoir une épaisseur de paroi entre deux dents voisines inférieure à 0,6 mm, par exemple.

Pour obtenir une pâte selon l'invention ayant les avantages décrits ci-dessus, et en particulier une texture en bouche très consistante, on peut aussi fabriquer des pâtes telles que décrites ci-dessus présentant des dents, qui prises une sur deux, ont une hauteur au moins 1,5 fois plus élevée que la hauteur des autres dents, par exemple.

On augmente ainsi le volume de la pâte proportionnellement à sa surface et donc aussi l'épaisseur de la pâte cuite, sans pour autant augmenter son temps de cuisson et négliger une fermeture optimale des dents après cuisson. Cette pâte peut ainsi cuire en un temps de l'ordre de 5 min, le produit cuit reste sensiblement cylindrique, et la texture en bouche de ce dernier est également améliorée en comparaison avec les autres produits cuits de l'invention décrits ci-dessus.

Pour obtenir une pâte selon l'invention ayant les avantages décrits ci-dessus, et en particulier présentant une rigidité du cylindre une fois cuit, on peut fabriquer des pâtes selon l'invention présentant les caractéristiques décrites ci-dessus et présentant en outre dans leur partie tubulaire un axe central relié à la paroi interne par au moins trois rayons longitudinaux par rapport à l'axe.

L'épaisseur des parois des rayons peut être comprise entre 0,6 et 1,1 mm, l'axe peut avoir un diamètre compris entre 0,6 et 1,1 mm, et les rayons peuvent être parallèles à l'axe de la pâte ou encore tourner par rapport à cet axe, par exemple. De préférence, on réalise des rayons parallèles et équiangulaires qui renforcent ainsi la rigidité du produit cuit.

En outre, ces rayons présentent un autre avantage pour les pâtes tubulaires de diamètre supérieur à 10 mm. En effet, qu'elles soient traditionnelles à cuisson longue ou selon l'invention, les pâtes de diamètre supérieure à 10 mm, notamment supérieure à 15 mm, tendent par leur propre poids à s'applatir dans l'assiette, et peuvent ainsi donner encore une impression d'ovalisation. Par contre, lorsqu'elles présentent les rayons décrits ci-dessus, les pâtes selon l'invention apparaissent dans l'assiette parfaitement rondes, quel que soit leur diamètre.

De préférence, le diamètre des pâtes selon l'invention est ainsi compris entre 6 et 30 mm, par exemple, ledit diamètre étant calculé à partir de la surface externe des pâtes.

Finalement, les pâtes selon la présente invention peuvent être fabriquées par des moyens de production déjà connus par l'homme du métier, et être ensuite commercialisées dans les gammes de pâtes longilignes et tubulaires à paroi externe lisse ou ondulée, pouvant être fourrées ou non, notamment les produits décrits déjà ci-dessus, par exemple.

En particulier, pour fabriquer les pâtes selon la présente invention, on mélange de la semoule de blé, notamment de l'espèce Triticum durum et Triticum aestivum, à de l'eau jusqu'à une teneur en eau de *65-75%,* dans un mélangeur traditionnel, par exemple. On peut ensuite malaxer le mélange pendant 10 à 15 min à une température de 30 à 35°C. De préférence, dans les 5 à 8 dernières minutes du malaxage, on diminue la pression absolue de l'air du mélangeur par une aspiration par le vide jusqu'à 30 à 130 millibar, de manière à ôter les bulles d'air du mélange.

On peut introduire alors la pâte de céréale dans un extrudeur à une vis, par exemple, et extruder la pâte à une pression de 85 à 150 bar, tout en refroidissant le corps de l'extrudeuse par de l'eau pour que la température de la pâte ne dépasse pas 45 à 55°C, par exemple. Un couteau placé à la sortie de la filière peut ensuite couper la pâte extrudée en morceaux de pâte ayant une longeur comprise entre 0,5 cm et 20 cm, par exemple.

La forme des pâtes selon l'invention est obtenue grâce à des inserts dans la filière présentant un orifice ayant une configuration proche de celle des pâtes selon l'invention, notamment une configuration un peu plus grande du fait de la rétraction des pâtes lors de leur séchage comme décrit ci-après, par exemple.

En effet, les morceaux de pâte peuvent alors être séchés d'une manière classique jusqu'à ce qu'ils aient une teneur en eau comprise entre 10 et 13%, mais de préférence 11,4 à 12,3%, par exemple. Ensuite, on préfère refroidir les pâtes séches ayant une température de l'ordre 60 à 82°C à la sortie du dispositif de séchage, jusqu'à une température ambiante de l'ordre 25°C, par exemple, puis les conditionner dans des sachets en plastique, par exemple.

La présente invention est illustrée ci-après par la description de trois modes de réalisation, par référence aux dessins annexés.
- La figure 1 est une vue en perspective, à une échelle agrandie, d'une pâte alimentaire selon l'invention.
- La figure 2 est une vue partielle, agrandie 52 fois au microscope optique, d'une coupe transversale de la pâte de la figure 1.
- La figure 3 est une vue en coupe transversale, à une échelle agrandie, d'une autre pâte alimentaire selon l'invention, présentant notamment une portion de tête ayant une forme de tête de clou.
- La figure 4 est une vue en coupe transversale, à une échelle agrandie, d'une autre pâte alimentaire selon l'invention, présentant des dents de taille différente.
- La figure 5 est une vue en coupe transversale, à une échelle agrandie, d'une autre pâte selon l'invention présentant dans sa partie tubulaire des rayons de renfort.

### Exemple 1

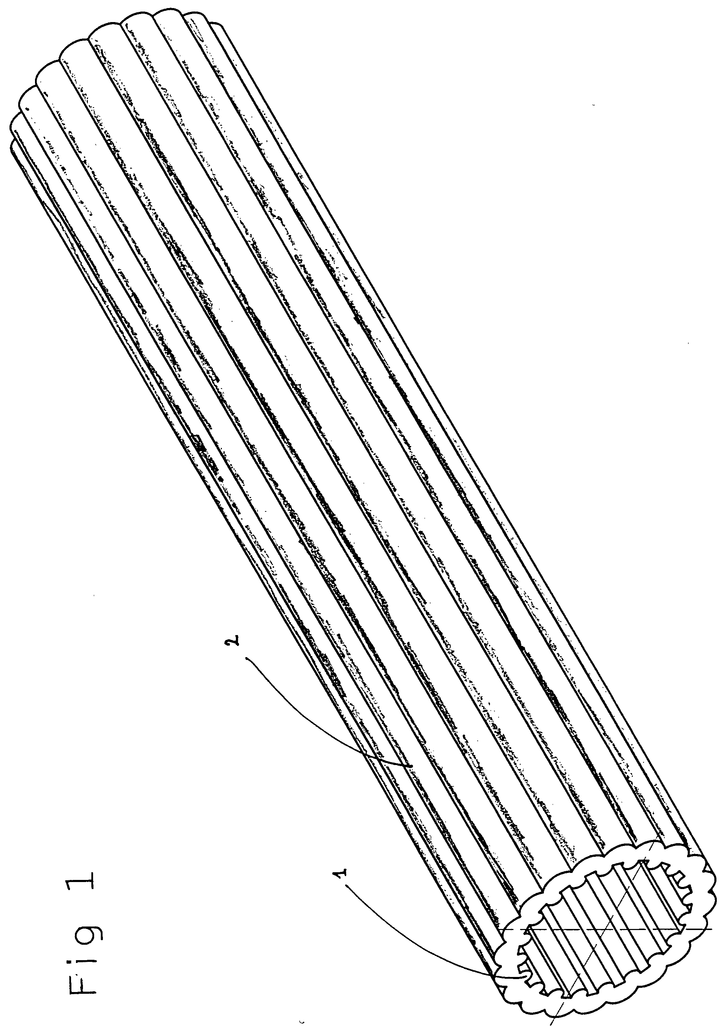

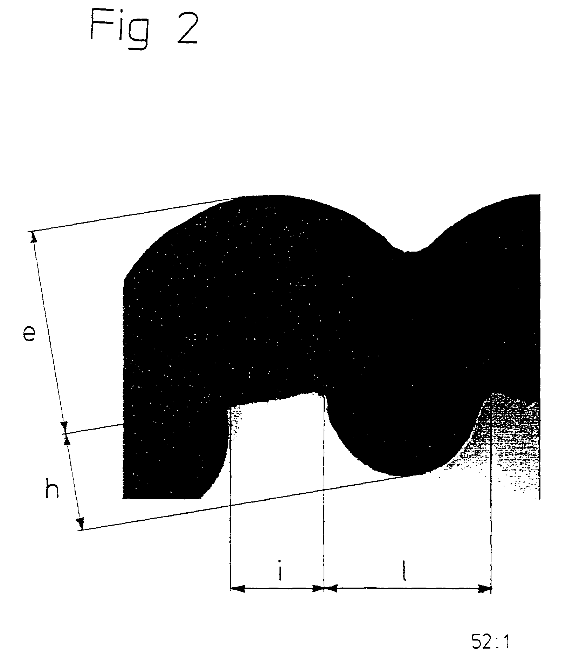

On réalise par des moyens de production connus de l'homme du métier les mêmes pâtes que celle illustrée aux figures 1 et 2.

Comme on peut le remarquer sur la figure 1, ces pâtes comprennent des dents internes "1" s'étendant longitudinalement et parallèlement à leur axe, et des ondulations externes "2" caractéristiques de pâtes de type penne, notamment de "penne rigate".

De plus, comme décrit sur la figure 2, l'épaisseur moyenne de la paroi "e" est de 1,05 mm, chaque dent a une hauteur moyenne "h" de 0,45 mm, une largeur moyenne " ℓ " de 0,70 mm, et un intervalle moyen "i" entre deux dents voisines de 0,49 mm. Enfin, le diamètre de ces pâtes est environ de 8,9 mm et leur longeur est environ de 50 mm.

Pour comparaison, on réalise des pâtes traditionnelles, à cuisson lente, ne présentant pas de dents internes, ayant les mêmes ondulations externes, une paroi d'épaisseur de 1,3 mm, un diamètre de 8,9 mm, et une longeur de 50 mm. Une telle pâte cuit dans les conditions décrites ci-après en 10 min.

Pour comparaison, on réalise également une pâte à cuisson rapide ne présentant pas de dents internes ni mêmes d'ondulations externes, ayant une paroi d'épaisseur de 0,5 mm, un diamètre de 8,9 mm, et une longeur de 50 mm.

On cuit ces trois types de pâte dans de l'eau à franche ébullition avec adjonction de 10 g/l de sel, jusqu'à ce que l'on discerne encore dans la paroi, à l'oeil nu, un anneau interne blanc d'amidon non gélatinisé.

On détermine alors la fermeté des pâtes cuites ci-dessus, à une température de 65°C, par un analyseur de texture Stevens (modèle LFRA) équipé d'un dipositif de coupe TA7 (Rheovisco A.G., Suisse) qui est animé d'une vitesse de 0,2mm/s, et par un Instron (modèle 1011) équipé d'une cellule Kramer qui est animé d'une vitesse de coupe/cisaillement de 500mm/min. Les résultats, exprimés en Newton, sont illustrés dans le tableau ci-après.

| Pâtes | Appareil Stevens (N) | Appareil Instron (N) |
|---|---|---|
| Selon l'invention | 3,73 | 815 |
| Traditionnelle à cuisson lente | 4,08 | 982 |
| Traditionnelle à cuisson rapide | 1,86 | 433 |

Comme on peut le voir dans le tableau ci-dessus, les pâtes selon l'invention ont une fermeté qui se rapproche nettement des pâtes traditionnelles à cuisson lente.

Le temps de cuisson des pâtes de l'invention et des pâtes traditionnelles à cuisson rapide, ainsi que l'appréciation par un groupe de personnes de leur texture en bouche et de leur aspect cylindrique, sont illustrés dans le tableau de l'exemple 4 ci-après.

### Exemple 2

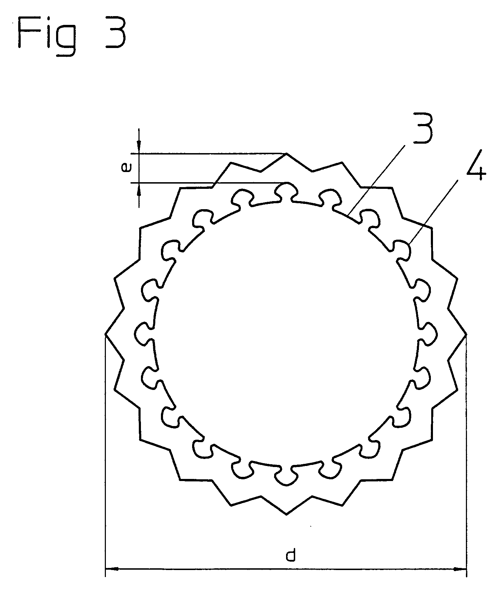

On réalise par des moyens de production connus de l'homme du métier les mêmes pâtes que celles illustrées à la figure 3. Ces pâte présentent une épaisseur "e" d'environ 0,7 mm, et des dents internes longitudinales et parallèles à l'axe, présentant une portion de tête "3" ayant une forme de tête de clou, et une surface "4" séparant deux dents voisines qui est concave. Le diamètre "d" de ces pâtes est environ de 8,7 mm et leur longeur est environ de 50 mm.

Pour comparaison on réalise des pâtes traditionnelles, à cuisson lente, ne présentant pas de dents internes, et ayant les mêmes ondulations externes, une épaisseur de paroi de 1,3 mm, un diamètre de 8,7 mm, et une longeur de 50 mm.

On cuit les deux types de pâte comme décrit à l'exemple 1. Les pâtes traditionnelles à cuisson lente cuisent en 10 min. Le temps de cuisson des pâtes de l'invention, ainsi que l'appréciation par un groupe de personnes de leur texture en bouche et de leur aspect cylindrique, sont illustrés dans le tableau de l'exemple 4 ci-après.

### Exemple 3

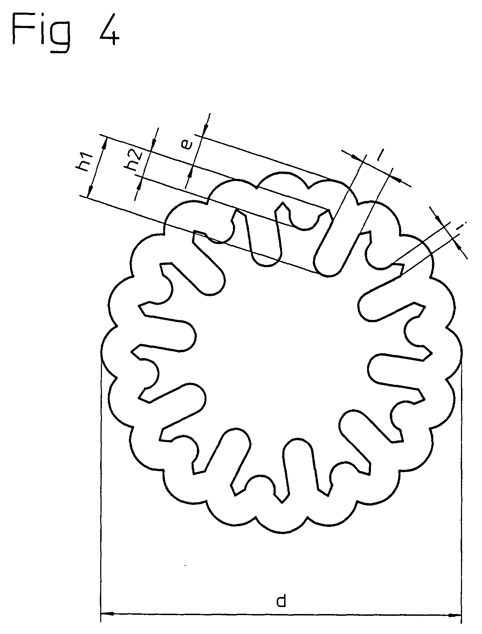

On réalise par des moyens de production connus de l'homme du métier les mêmes pâtes que celles illustrées à la figure 4. Comme on peut le remarquer, ces pâte comprennent des dents longitudinales et parallèles à l'axe de la pâte qui, prises une sur deux ont une hauteur "hl" de environ 1,55 mm, alors que les autres dents ont une hauteur "h2" de environ 0,65 mm. La largeur "ℓ" des dents est de environ 0,72 mm, l'intervalle "i" entre deux dents voisines est de environ 0,36 mm, l'épaisseur de la paroi "e" est de environ 0,72 mm, son diamètre "d" est de environ 8,7 mm et la longeur totale de la pâte est de environ 50 mm.

Pour comparaison on réalise des pâtes traditionnelles ne présentant pas de dents, et ayant les mêmes ondulations externes, une épaisseur de paroi de 1,3 mm, un diamètre de 8,7 mm, et une longeur de 50 mm.

On cuit les deux types de pâte comme décrit à l'exemple 1. Les pâtes traditionnelles à cuisson lente cuisent en 10 min. Le temps de cuisson des pâtes de l'invention, ainsi que l'appréciation par un groupe de personnes de leur texture en bouche et de leur aspect cylindrique, sont illustrés dans le tableau de l'exemple 4 ci-après.

### Exemple 4

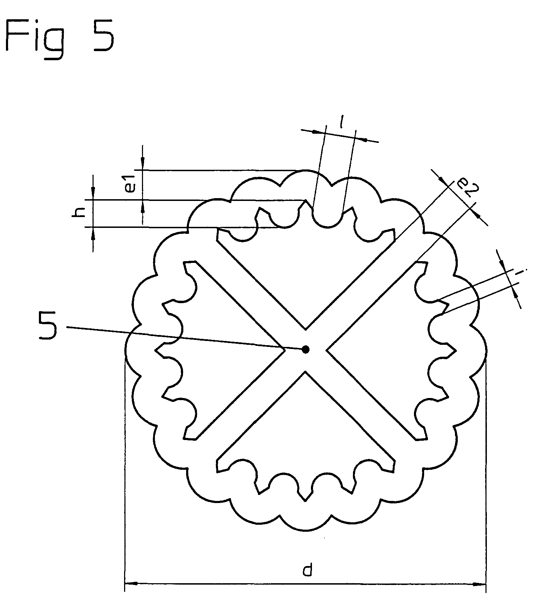

On réalise par des moyens de production connus de l'homme du métier les mêmes pâtes que celles illustrées à la figure 5. L'épaisseur de la paroi "el" est de environ 0,72 mm, chaque dent longitudinale et parallèle à l'axe de la pâte a une hauteur "h" de environ 0,66 mm, une largeur " ℓ " de environ 0,72 mm et un intervalle "i" entre deux dents voisines de environ 0,35 mm. Ces pâtes présentent en outre un axe "5" portant 4 rayons sensiblement plans, longitudinaux par rapport à l'axe de la pâte et équiangulaires de 90°C, ayant une épaisseur de paroi "e2" de environ 0,72 mm. Enfin, le diamètre "d" de la pâte est de environ 8,7 mm et sa longeur totale est de environ 50 mm.

Pour comparaison on réalise des pâtes traditionnelles ne présentant pas de dents ni de rayons internes, et ayant les mêmes ondulations externes, une épaisseur de paroi de 1,3 mm, un diamètre de 8,7 mm, et une longeur de 50 mm.

On cuit les deux types de pâte comme décrit à l'exemple 1, puis l'on teste alors la qualité de la texture en bouche, de la fermeté et de l'aspect cylindrique de ces pâtes, par les moyens décrits ci-dessous.

L'appréciation de la texture en bouche et de la forme cylindrique de la pâte de l'invention a été déterminée par un test gustatif et visuel auprès d'une trentaine de personnes. Les valeurs sont données en pourcentage de personnes ayant trouvé les pâtes selon l'invention similaires à celles de l'exemple comparatif correspondant (pâte traditionnelle à cuisson lente).

De même, on réalise le même test de comparaison entre les deux pâtes cuites, à cuisson rapide et à cuisson lente, décrites dans les exemples comparatifs de la pâte de l'exemple 1. Les valeurs sont données en pourcentage de personnes ayant trouvé les pâtes à cuisson rapide traditionnelles similaires à celles des pâtes traditionnelles à cuisson lente.

Les résultats des différents tests effectués sur les pâtes des exemples 1 à 4, ainsi que leur temps de cuisson, sont illustrés dans le tableau ci-après

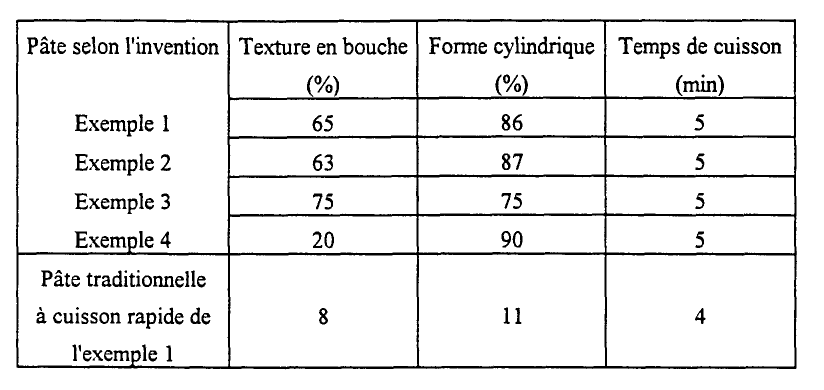

## Revendications

1. Pâte alimentaire à cuisson rapide longiligne et tubulaire, caractérisée en ce qu'elle présente, en section transversale, une paroi d'épaisseur comprise entre 0,60 et 1,1 mm et des dents à la surface interne du tube, longitudinales et parallèles, ayant une hauteur comprise entre 0,3 et 1,6 mm, et un rapport hauteur sur épaisseur de la paroi compris entre 0,4 et 2, et en ce que les dents internes présentent une largeur comprise entre 0,3 et 0,9 mm, et un intervalle entre deux dents voisines compris entre 0,3 et 0,7 mm, les dents internes du tube étant susceptibles de se refermer pendant la cuisson en laissant juste de toutes petites lignes extérieures longitudinales.

2. Pâte alimentaire selon l'une des revendications 1 et 2, caractérisée en ce que la portion de tête des dents est sensiblement plane, convexe ou en forme de tête de clou.

3. Pâte alimentaire selon la revendication 1, caractérisée en ce que la surface de la paroi séparant deux dents voisines est concave.

4. Pâte selon l'une des revendications 1 à 3, caractérisée en ce que les dents, prises une sur deux, ont une hauteur au moins 1,5 fois plus élevée que la hauteur des autres dents.

5. Pâte alimentaire selon l'une des revendications 1 à 4, caractérisée en ce qu'elle présente dans sa partie tubulaire un axe central relié à la paroi interne par au moins trois rayons.

## Patentansprüche

1. Schnellkochbare Teigware von langgestreckter Rohrform, dadurch gekennzeichnet, dass sie im Querschnitt eine Wand mit einer Dicke zwischen 0,60 und 1,1 mm und auf der Innenseite des Rohrs parallele und sich in Längsrichtung erstreckende Rippen aufweist, die eine Höhe zwischen 0,3 und 1,6 mm und ein Verhältnis von Höhe zu Dicke der Wand zwischen 0,4 und 2 besitzen, und dass die inneren Rippen eine Breite zwischen 0,3 und 0,9 mm und einen Zwischenraum zwischen zwei benachbarten Rippen zwischen 0,3 und 0,7 mm aufweisen, wobei die inneren Rippen des Rohrs sich während des Kochens schließen können, indem sie gerade ganz kleine äußere Längslinien belassen.

2. Teigware nach Anspruch 1, dadurch gekennzeichnet, dass der Kopfbereich der Rippen im wesentlichen eben, konvex oder nagelkopfförmig ist.

3. Teigware nach Anspruch 1, dadurch gekennzeichnet, dass die Oberfläche der zwei benachbarte Rippen voneinander trennenden Wand konkav ist.

4. Teigware nach einem der Ansprüche 1 bis 3, dadurch gekennzeichnet, dass jede zweite Rippe eine Höhe mindestens vom 1,5fachen der Höhe der anderen Rippen besitzt.

5. Teigware nach einem der Ansprüche 1 bis 4, dadurch gekennzeichnet, dass sie in ihrem rohrförmigen Teil eine zentrale Achse besitzt, die mit der Innenwand durch mindestens drei Speichen verbunden ist.

## Claims

1. Long thin tubular quick-cooking pasta, characterized in that it has, in cross section, a wall with a thickness of between 0.60 and 1.1 mm and longitudinal parallel teeth on the internal surface of the tube, having a height of between 0.3 and 1.6 mm, and a ratio of height to wall thickness of between 0.4 and 2, and in that the internal teeth have a width of between 0.3 and 0.9 mm and an interval between two adjacent teeth of between 0.3 and 0.7 mm, the internal teeth of the tube being capable of closing during cooking while barely leaving quite small longitudinal outer lines.

2. Pasta according to either of claims 1 or 2, characterized in that the head portion of the teeth is substantially flat, convex or is shaped like the head of a nail.

3. Pasta according to claim 1, characterized in that the surface of the wall separating two adjacent teeth is concave.

4. Pasta according to one of claims 1 to 3, characterized in that one out of two teeth has a height at least 1.5 times higher than the height of the other teeth.

5. Pasta according to one of claims 1 to 4, characterized in that it has, in its tubular part, a central axle connected to the internal wall by at least three spokes.
